Europäisches Patentamt

European Patent Office

Office européen des brevets

(19)

(11) Numéro de publication : **0 188 958**
**B1**

---

(12)

# FASCICULE DE BREVET EUROPÉEN

(45) Date de publication du fascicule du brevet :
**19.07.89**

(21) Numéro de dépôt : **85402581.4**

(22) Date de dépôt : **20.12.85**

(51) Int. Cl.⁴ : **B 05 D   5/08**, B 05 D   5/06,
B 44 C   1/04, A 47 J  36/02

---

(54) **Procédé pour réaliser un décor sur un revêtement de polytétrafluoréthylène et ustensile culinaire s'y rapportant.**

---

(30) Priorité : **23.01.85 FR 8500896**

(43) Date de publication de la demande :
**30.07.86 Bulletin 86/31**

(45) Mention de la délivrance du brevet :
**19.07.89 Bulletin 89/29**

(84) Etats contractants désignés :
**AT BE CH DE GB IT LI LU NL SE**

(56) Documents cités :
**EP--A-- 0 022 257**
**FR--A-- 2 286 010**

(73) Titulaire : **SEB S.A.**
**F-21260 Selongey (FR)**

(72) Inventeur : **Gardaz, Claudine**
**Villa "Yute Puce" Le Petit Salagine Bloye**
**F-74150 Rumilly (FR)**
Inventeur : **Buffard, Jean-Pierre**
**Cité de la Salle Le Bouchet**
**F-74150 Rumilly (FR)**

(74) Mandataire : **Bouju, André**
**Cabinet Bouju 38 avenue de la Grande Armée**
**F-75017 Paris (FR)**

Jouve, 18, rue St-Denis, 75001 Paris, France

# EP 0 188 958 B1

**Description**

La présente invention concerne un procédé pour réaliser un décor sur un revêtement de polytétrafluoréthylène (PTFE) appliqué sur un support métallique.

L'invention vise également un ustensile culinaire comprenant un revêtement de PTFE, ce revêtement étant recouvert d'un décor obtenu conformément au procédé précité.

Il est bien connu que rien n'adhère sur un revêtement de PTFE. On ne peut donc appliquer sur celui-ci un motif à effet décoratif qui adhère suffisamment à ce revêtement.

Dans le cas notamment des ustensiles culinaires revêtus de PTFE, il est particulièrement intéressant d'améliorer l'esthétique de ceux-ci en appliquant sur le revêtement de PTFE, à l'intérieur ou à l'extérieur de l'ustensile, un décor coloré qui adhère parfaitement à celui-ci et qui résiste à l'usage.

Ces ustensiles culinaires sont généralement obtenus par emboutissage d'un disque métallique, notamment en aluminium, préalablement revêtu du PTFE. Lors de cet emboutissage, le revêtement de PTFE est soumis à des efforts d'étirage très intenses qui tendent à arracher ce revêtement.

On a décrit dans le FR-A-2 286 010 un procédé permettant de décorer des revêtements de polymère thermostable, tel que le PTFE qui consiste à appliquer une composition de polymère thermostable soit directement au-dessous, soit en couche ultérieure au-dessus, d'une composition de catalyseur d'oxydation disposée en motif décoratif. Dans ce procédé, le catalyseur d'oxydation ou ses produits de décomposition diffuse dans le revêtement, soit par réaction sur les composants du revêtement, par catalyse de réaction dans le revêtement, soit par lui-même, rendant à la cuisson le motif décoratif visible dans le revêtement de polymère thermostable.

Le catalyseur d'oxydation utilisé est un composé et en particulier un sel métallique, tel qu'un octoate métallique.

Le décor est ainsi formé par réaction chimique dans la masse du revêtement.

Ce procédé est de mise en œuvre compliquée et ne permet pas d'obtenir une grande variété de teintes.

Le but de la présente invention est de proposer un procédé pour réaliser un décor sur un revêtement de PTFE appliqué sur un support métallique qui soit bien visible à la surface du revêtement dont les teintes peuvent être très variables et qui adhère bien à la surface du revêtement.

Suivant l'invention, ce procédé comprend les étapes suivantes :

on applique sur le support métallique, une couche d'une composition de produit de revêtement antiadhérent à base de dispersion de PTFE colorée ou non,

on sèche à l'air cette couche,

on applique sur celle-ci, à travers un écran sérigraphique, une composition colorée renfermant une dispersion aqueuse de résine fluorocarbonée ou une poudre de résine fluorocarbonée, additionnée d'un agent épaississant et/ou gélifiant et d'un solvant miscible à l'eau, ayant une tension de vapeur inférieure à celle de l'eau après séchage, et,

on cuit simultanément les deux couches ainsi obtenues, de façon à faire fritter ensemble les particules de PTFE et de résine fluorocarbonée.

La demanderesse a constaté qu'une simple dispersion aqueuse de résine fluorocarbonée ne pouvait pas être utilisée pour réaliser un décor par sérigraphie.

En effet, les particules de résine fluorocarbonée résistent très mal aux efforts de cisaillement produits par le passage forcé de ces particules à travers les mailles très fines de l'écran sérigraphique. De plus, ces particules ont tendance à s'agglomérer et à colmater les mailles de l'écran.

La demanderesse a constaté de façon surprenante qu'on pouvait remédier à cet inconvénient en ajoutant à la résine fluorocarbonée sous forme de poudre, un agent gélifiant et/ou épaississant, de façon à transformer cette composition en pâte dans laquelle les particules de résine fluorocarbonée sont séparées les unes des autres, ce qui évite leur agglomération.

Par ailleurs, il est préférable d'ajouter à cette pâte ou gel un solvant tel qu'un glycol, ayant une tension de vapeur inférieure à celle de l'eau, de façon à éviter un séchage trop rapide de ladite composition, sur et entre les mailles de l'écran sérigraphique.

De plus, la cuisson simultanée des deux couches, à savoir de la première couche de PTFE et de la couche du décor à base de résine fluorocarbonée, permet d'obtenir un frittage des particules de la première couche avec celles de la seconde couche et ainsi d'obtenir une excellente adhérence de celle-ci.

Selon une version avantageuse de l'invention, la composition renfermant la résine fluorocarbonée est additionnée d'un agent épaississant et/ou gélifiant donnant à cette composition une viscosité comprise entre 10 000 et 120 000 centipoises mesurées à 20 ºC.

Cette gamme de viscosité permet d'obtenir les meilleurs résultats, à savoir une répartition homogène des particules de résine fluorocarbonée et une excellente définition du motif du décor sans bavure sur la première couche de PTFE.

Selon une version préférée de l'invention, la résine fluorocarbonée est du PTFE.

Cependant, cette résine peut être remplacée par du tétrafluoroalcoxy (TFA) ou du fluoréthylène propylène (FEP) ou d'un mélange en toutes proportions de ces résines fluorocarbonées.

La composition renfermant la résine fluorocarbonée est de préférence additionnée d'une base, de façon que le pH de cette composition soit supérieur à 9. Cette base catalyse la formation d'un gel.

De préférence, l'agent épaississant et/ou gélifiant est un composé chimique qui se sublime à une température inférieure ou égale à la température de frittage des particules de PTFE et de résine fluorocarbonée.

De ce fait, après frittage, il ne subsiste dans le décor, aucune trace de cet agent épaississant et/ou gélifiant, susceptible d'affecter les qualités alimentaires du revêtement ainsi que son aspect et ses performances anti-adhérentes.

Les meilleurs résultats sont obtenus lorsque l'agent épaississant et/ou gélifiant est un copolymère d'acide acrylique et/ou d'acide méthacrylique.

Toutefois, d'excellents résultats peuvent également être obtenus en utilisant, en tant qu'agent épaississant et/ou gélifiant des bentones, des polysaccharides, des alginates, de la carboxyméthylcellulose ou des gouaranates.

On donne ci-après quelques exemples de mise en œuvre du procédé conforme à l'invention.

## Exemple 1

On applique sur un disque d'aluminium préalablement décapé et soumis à une attaque chimique pour former sur sa surface des cavités, une composition de produit de revêtement antiadhérent à base de dispersion aqueuse de particules de PTFE pour former la première couche. On sèche cette couche entre 30 et 80 °C afin d'évaporer l'eau et les solvants de la composition de revêtement anti-adhérent.

On prépare simultanément la composition suivante destinée au décor :

| | |
|---|---|
| Dispersion aqueuse de PTFE : | 100 à 800 parties en poids |
| Propylène glycol : | 20 à 400 parties en poids |
| Copolymère acrylique sous forme de dispersion aqueuse additionnée d'hydroxyde d'ammonium : | 30 à 600 parties en poids |
| Pigment coloré sous forme de dispersion aqueuse : | 50 à 400 parties en poids. |

La dispersion aqueuse de PTFE peut être par exemple celle commercialisée sous la référence TF 5135 par HOECHST ou 675 AD par ICI, qui renferme des particules de PTFE de dimensions comprises entre 0,2 et 0,5 μ. La dispersion aqueuse de copolymère acrylique peut être celle connue sous la dénomination ROHAGIT SD 15 renfermant 8 % d'extrait sec, ou VISCALEX VG 2 et VISCALEX VG 3.

La composition précitée est préparée en mélangeant et en ajoutant dans l'ordre, la dispersion aqueuse contenant le pigment, puis la dispersion de PTFE et enfin le copolymère acrylique sous forme d'un gel renfermant par exemple 250 g de ROHAGIT SD 15, 655 g d'eau et 75 g d'hydroxyde d'ammonium.

La viscosité du mélange obtenu, mesurée au moyen d'un viscosimètre Brookfield est égale à 93 000 centipoises à 20 °C.

Après homogénéisation du mélange, on applique celui-ci sur la première couche de PTFE au moyen d'un râcle à travers un écran sérigraphique en acier inoxydable à mailles de dimensions comprises entre 70 et 200 μ, présentant le motif du décor que l'on veut reproduire.

On sèche ensuite cette couche de sérigraphie à 50-70 °C.

Les deux couches sont frittées ensemble à 400 °C pendant 6 minutes.

On obtient alors une couche de décoration dont l'épaisseur est comprise entre 2 et 25 μ, qui adhère parfaitement à la couche de PTFE sous-jacente.

Le disque ainsi revêtu et décoré peut être embouti sous la forme d'une casserole, poêle, sauteuse ou autres. Cette opération soumet la première couche de PTFE et la seconde couche de décor à des efforts d'étirage très intenses, qui n'affectent pas l'adhérence de ces deux couches.

## Exemple 2

On procède comme dans l'ensemble 1 en utilisant pour réaliser la seconde couche de décoration, la composition suivante :

| | |
|---|---|
| Dispersion aqueuse de TFA (tétrafluoroalcoxy) : | 50 à 400 g |
| Propylène glycol : | 20 à 100 g |
| Copolymère acrylique sous forme de dispersion aqueuse additionnée d'hydroxyde d'ammonium : | 5 à 400 g |
| Pigment sous forme de dispersion aqueuse : | 5 à 100 g |

La dispersion aqueuse de TFA peut être celle commercialisée sous la dénomination TFA 6900 (50 % d'extrait sec) par la firme HOECHST.

Le copolymère acrylique peut, comme dans l'exemple 1 être du ROHAGIT SD 15 à 8 % d'extrait sec. Cette composition présente une viscosité égale à 31 000 centipoises.

# EP 0 188 958 B1

Exemple 3

On procède comme dans les exemples précédents, en utilisant la composition suivante :

| | |
|---|---|
| Poudre de PTFE : | 5 à 50 g |
| Propylène glycol : | 5 à 100 g |
| Copolymère acrylique sous forme de dispersion aqueuse additionnée d'hydroxyde d'ammonium : | 5 à 50 g |
| Pigment sous forme de dispersion aqueuse : | 1 à 100 g. |

Le PTFE sous forme de poudre peut être le produit vendu sous la référence 9202 par la firme HOECHST.

## Revendications

1. Procédé pour réaliser un décor sur un revêtement de polytétrafluoréthylène (PTFE), appliqué sur un support métallique, comprenant les étapes suivantes :

on applique sur le support métallique, une composition de produit de revêtement anti-adhérent à base de dispersion aqueuse de PTFE colorée ou non,

on sèche à l'air cette couche,

on applique sur celle-ci, à travers un écran sérigraphique, une composition colorée renfermant une dispersion aqueuse de résine fluorocarbonée ou une poudre de résine fluorocarbonée additionnée d'un agent épaississant et/ou gélifiant et d'un solvant miscible à l'eau ayant une tension de vapeur inférieure à celle de l'eau après séchage, et,

on cuit simultanément les deux couches ainsi obtenues de façon à faire fritter les particules de PTFE et de résine fluorocarbonée.

2. Procédé conforme à la revendication 1, caractérisé en ce que la composition renfermant la résine fluorocarbonée est additionnée d'un agent épaississant et/ou gélifiant donnant à cette composition une viscosité comprise entre 10 000 et 120 000 centipoises.

3. Procédé conforme à l'une des revendications 1 ou 2, caractérisé en ce que la résine fluorocarbonée est choisie parmi le groupe comprenant le polytétrafluoréthylène (PTFE), le tétrafluoroalcoxy (TFA) et le fluoréthylène propylène (FEP) ou un mélange de ces polymères.

4. Procédé conforme à l'une des revendications 1 à 3, caractérisé en ce que la composition renfermant la résine fluorocarbonée est additionnée d'une base de façon que le pH de cette composition soit supérieur à 9.

5. Procédé conforme à l'une des revendications 1 à 4, caractérisé en ce que l'agent épaississant et/ou gélifiant est un composé chimique qui se sublime à une température inférieure ou égale à la température de frittage des particules de PTFE et de résine fluorocarbonée.

6. Procédé conforme à l'une des revendications 1 à 5, caractérisé en ce que l'agent épaississant et/ou gélifiant est un copolymère d'acide acrylique et/ou d'acide méthacrylique.

7. Procédé conforme à l'une des revendications 1 à 5, caractérisé en ce que l'agent épaississant et/ou gélifiant est choisi parmi les composés suivants : bentones, polysaccharides, alginates, la carboxyméthylcellulose, et les guaranates.

8. Procédé conforme à l'une des revendications 1 à 7, caractérisé en ce que le solvant ajouté à la composition est un glycol.

9. Procédé conforme à l'une des revendications 1 à 8, caractérisé en ce que la composition appliquée sur la couche de PTFE renferme les composés suivants :

| | |
|---|---|
| Dispersion aqueuse de PTFE (60 % extrait sec) : | 100 à 800 parties en poids |
| Propylène glycol : | 20 à 400 parties en poids |
| Copolymère acrylique sous forme de dispersion aqueuse additionnée d'hydroxyde d'ammonium : | 30 à 600 parties en poids |
| Pigment sous forme de dispersion aqueuse : | 50 à 400 parties en poids. |

10. Procédé conforme à l'une des revendications 1 à 8, caractérisé en ce que la composition appliquée sur la couche de PTFE renferme les composés suivants :

| | |
|---|---|
| Dispersion aqueuse de TFA (50 % extrait sec) : | 50 à 400 g |
| Propylène glycol : | 20 à 100 g |
| Copolymère acrylique sous forme de dispersion aqueuse additionnée d'hydroxyde d'ammonium : | 5 à 400 g |
| Pigment sous forme de dispersion aqueuse : | 5 à 100 g |

11. Procédé conforme à l'une des revendications 1 à 8, caractérisé en ce que la composition appliquée sur la couche de PTFE renferme les composés suivants :

4

| Poudre de PTFE : | 5 à 50 g |
| Propylène glycol : | 5 à 100 g |
| Copolymère acrylique sous forme de dispersion aqueuse | |
| additionnée d'hydroxyde d'ammonium : | 5 à 50 g |
| Pigment sous forme de dispersion aqueuse : | 1 à 100 g |

12. Ustensile culinaire comprenant un revêtement antiadhérent à base de PTFE caractérisé en ce que ce revêtement est recouvert d'un décor obtenu conformément au procédé selon l'une des revendications 1 à 11.

**Claims**

1. A method for forming a decoration on a coating of polytetrafluoroethylene (PTFE) applied on a metallic substrate, said method comprising the following steps :

a layer formed by a composition of anti-adhesive coating product based on an aqueous dispersion of PTFE which may or may not be colored is applied on the metallic substrate,

said layer is air dried,

there is applied on said layer through a serigraphic screen a colored composition containing an aqueous dispersion of fluorocarbon resin or a powder of fluorocarbon resin to which are added thickening and/or gelling agent and a solvent which is miscible with water and has a vapor pressure below that of water after drying,

the two layers thus obtained are baked simultaneously in order to sinter the particles of PTFE and of fluorocarbon resin.

2. A method according to claim 1, characterized in that the composition containing the fluorocarbon resin is supplied with an addition consisting of a thickening and/or gelling agent which provides said composition with a viscosity within the range of 10,000 to 120,000 centipoises.

3. A method according to one of claims 1 or 2, characterized in that the fluorocarbon resin is selected from the group comprising polytetrafluoroethylene (PTFE), tetrafluoroalcoxy (TFA) and fluorinated ethylene propylene (FEP) or a mixture of these polymers.

4. A method according to one of claims 1 to 3, characterized in that the composition containing the fluorocarbon resin is applied with an addition consisting of a base so as to ensure that the pH value of this composition is higher than 9.

5. A method according to one of claims 1 to 4, characterized in that the thickening and/or gelling agent is a chemical compound which sublimates at a temperature below or equal to the sintering temperature of the particles of PTFE and of fluorocarbon resin.

6. A method according to one of claims 1 to 5, characterized in that the thickening and/or gelling agent is a copolymer of acrylic acid and/or methacrylic acid.

7. A method according to one of claims 1 to 5, characterized in that the thickening and/or gelling agent is selected from the following compounds : bentones, polysaccharides, alginates, carboxymethylcellulose, and guaranates.

8. A method according to one of claims 1 to 7, characterized in that the solvent added to the composition is a glycol.

9. A method according to one of claims 1 to 8, characterized in that the composition applied on the layer of PTFE contains the following compounds :

| Aqueous dispersion of PTFE (60 % dry extract) : | 100 to 800 parts by weight |
| Propylene glycol : | 20 to 400 parts by weight |
| Acrylic copolymer in the form of an aqueous dispersion | |
| supplied with an addition of ammonium hydroxide : | 30 to 600 parts by weight |
| Pigment in the form of an aqueous dispersion : | 50 to 400 parts by weight |

10. A method according to one of claims 1 to 8, characterized in that the composition applied on the layer of PTFE contains the following compounds :

| Aqueous dispersion of TFA (50 % dry extract) : | 50 to 400 g |
| Propylene glycol : | 20 to 100 g |
| Acrylic copolymer in the form of an aqueous dispersion | |
| supplied with an addition of ammonium hydroxide : | 5 to 400 g |
| Pigment in the form of an aqueous dispersion : | 5 to 100 g |

11. A method according to one of claims 1 to 8, characterized in that the composition applied on the PTFE layer contains the following compounds :

PTFE in powdered form :                                                        5 to 50 g
Propylene glycol :                                                             5 to 50 g
Acrylic copolymer in the form of an aqueous dispersion supplied
with an addition of ammonium hydroxide :                                       5 to 50 g
Pigment in the form of an aqueous dispersion :                                 1 to 100 g.

12. A culinary utensil provided with a PTFE based anti-adhesive coating, characterized in that said coating is covered with a decorative pattern obtained in accordance with the method according to one of claims 1 to 11.


## Patentansprüche

1. Verfahren zum Erzielen einer Verzierung auf einer auf einem metallischen Träger aufgebrachten Polytetrafluorethylen (PTFE)-Beschichtung, welches die folgende Schritte umfaßt :

Auf den metallischen Träger wird eine Zusammensetzung eines Antihaft-Beschichtungsmittels auf Basis einer gefärbten oder ungefärbten wäßrigen Dispersion von PTFE aufgetragen.

Diese Schicht wird luftgetrocknet.

Auf diese Schicht wird über eine Serigraphieschablone eine gefärbte Zusammensetzung aufgetragen, welche eine wäßrige Dispersion eines Fluorkohlenstoffharzes oder ein Pulver aus Fluorkohlenstoffharz unter Zusatz eines Verdickungs- und/oder Gelierungsmittels und eines mit Wasser mischbaren Lösungsmittels, das einen Dampfdruck besitzt, der nach Trocknung niedriger als der von Wasser, umfaßt, und

die beiden auf diese Weise erhaltenen Schichten werden gleichzeitig ausgehärtet, indem man die PTFE-Teilchen und die Fluorkohlenstoffteilchen sintern läßt.

2. Verfahren nach Anspruch 1, dadurch gekennzeichnet, daß der das Fluorkohlenstoffharz enthaltenden Zusammensetzung ein Verdickungs- und/oder Gelierungsmittel zugesetzt wird, welche(s) dieser Zusammensetzung eine Viskosität zwischen 10 000 und 120 000 cP verleih(t)(en).

3. Verfahren nach Anspruch 1 oder 2, dadurch gekennzeichnet, daß das Fluorkohlenstoffharz aus der Gruppe bestehend aus Polytetrafluorethylen (PTFE) Tetrafluoralcoxy (TFA) und Fluorethylen-Propylen (FEP) oder einer Mischung dieser Polymeren ausgewählt wird.

4. Verfahren nach einem der Ansprüche 1 bis 3, dadurch gekennzeichnet, daß der das Fluorkohlenstoffharz enthaltenden Zusammensetzung eine Base zugesetzt wird, sodaß der pH-Wert dieser Zusammensetzung größer als 9 ist.

5. Verfahren nach einem der Ansprüche 1 bis 4, dadurch gekennzeichnet, daß das Verdickungs- und/oder Gelierungsmittel eine chemische Verbindung ist, die bei einer Temperatur unter oder gleich der Sintertemperatur der PTFE-Teilchen und Fluorkohlenstoffharz-Teilchen sublimiert.

6. Verfahren nach einem der Ansprüche 1 bis 5, dadurch gekennzeichnet, daß das Verdickungs- und/oder Gelierungsmittel ein Copolymer der Acrylsäure und/oder Methacrylsäure ist.

7. Verfahren nach einem der Ansprüche 1 bis 5, dadurch gekennzeichnet, daß das Verdickungs- und/oder Gelierungsmittel aus folgenden Verbindungen ausgewählt wird : Bentone, Polysaccharide, Alginate, Carboxymethylcellulose und Guaranate.

8. Verfahren nach einem der Ansprüche 1 bis 7, dadurch gekennzeichnet, daß das der Zusammensetzung zugesetzte Lösungsmittel ein Glykol ist.

9. Verfahren nach einem der Ansprüche 1 bis 8, dadurch gekennzeichnet, daß die auf die PTFE-Schicht aufgebrachte Zusammensetzung folgende Verbindungen umfaßt :

Wäßrige Dispersion von PTFE (60 % Trockenextrakt)                       100 bis 800 Gewichtsteile
Propylenglykol                                                          20 bis 400 Gewichtsteile
Acryl-Copolymer in Form einer wäßrigen Dispersion
mit Zusatz von Ammoniumhydroxid                                         30 bis 600 Gewichtsteile
Pigment in Form einer wäßrigen Dispersion                               50 bis 400 Gewichtsteile.

10. Verfahren nach einem der Ansprüche 1 bis 8, dadurch gekennzeichnet, daß die auf die PTFE-Schicht aufgetragene Zusammensetzung folgende Verbindungen umfaßt :

Wässrige Dispersion von TFA (50 % Trockenextrakt)                       50 bis 400 g
Propylenglykol                                                          20 bis 100 g
Acryl-Copolymer in Form einer wässrigen Dispersion
mit Zusatz von Ammoniumhydroxid                                         5 bis 400 g
Pigment in Form einer wässrigen Dispersion                              5 bis 100 g.

11. Verfahren nach einem der Ansprüche 1 bis 8, dadurch gekennzeichnet, daß die auf die PTFE-Schicht aufgetragene Zusammensetzung folgende Verbindungen umfaßt :

| | |
|---|---|
| PTFE-Pulver | 5 bis 50 g |
| Propylenglykol | 5 bis 100 g |
| Acryl-Copolymer in Form einer wässrigen Dispersion | |
| mit Zusatz von Ammoniumhydroxid | 5 bis 50 g |
| Pigment in Form einer wäßrigen Dispersion | 1 bis 100 g |

12. Kochgeschirr mit einer Antihaft-Beschichtung auf Basis von PTFE, dadurch gekennzeichnet, daß die Beschichtung mit einer nach dem Verfahren gemäß einem der Ansprüche 1 bis 11 erzielten Verzierung versehen ist.